(19) Europäisches Patentamt
European Patent Office
Office européen des brevets

(11) Veröffentlichungsnummer: **0 030 693**
**B1**

# (12) EUROPÄISCHE PATENTSCHRIFT

(45) Veröffentlichungstag der Patentschrift: **06.04.83**

(51) Int. Cl.³: **C 09 B 1/46**, C 09 B 1/516, C 09 B 1/54, C 09 B 1/56, C 09 B 5/02

(21) Anmeldenummer: **80107699.3**

(22) Anmeldetag: **06.12.80**

## (54) Verfahren zur Herstellung von Triazinylamino-anthrachinonen.

(30) Priorität: **18.12.79 DE 2950876**

(43) Veröffentlichungstag der Anmeldung: **24.06.81 Patentblatt 81/25**

(45) Bekanntmachung des Hinweises auf die Patenterteilung: **06.04.83 Patentblatt 83/14**

(84) Benannte Vertragsstaaten: **CH DE FR GB LI**

(56) Entgegenhaltungen:
**DE-A-1 644 532**
**DE-A-2 903 132**
**DE-B-1 191 060**

(73) Patentinhaber: **BAYER AG, Zentralbereich Patente, Marken und Lizenzen, D-5090 Leverkusen 1, Bayerwerk (DE)**

(72) Erfinder: **Neeff, Rütger, Dr., Berta-von-Suttner-Strasse 22, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von Triazinylamino-anthrachinonen

Gegenstand der Erfindung ist ein Verfahren zur Herstellung von Anthrachinonverbindungen der Formel

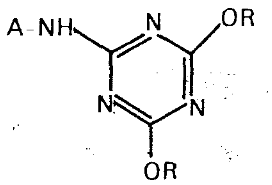

(I)

worin A ein ggf. substituierter Anthrachinonrest und R ggf. substituierter Arylrest sind.

Verbindungen dieses Typs wurden bisher in zwei- oder mehrstufiger Arbeitsweise durch Umsetzung entsprechender Amino-anthrachinone mit Cyanurchlorid und Phenolen vorzugsweise in Gegenwart von Säureakzeptoren und/oder organischen Lösungsmitteln hergestellt (vgl. DE-A 1644532, DE-B 1191060 sowie AU-A 230839).

Diese Verfahren konnten jedoch nicht voll befriedigen, da die Raum-/Zeitausbeute zu wünschen übrig liess. Darüber hinaus treten bei der Verwendung von säurebindenden Mitteln lästige salzhaltige Abwässer auf, deren Reinigung zusätzliche Kosten verursacht. Auch der Einsatz von zum Teil feuergefährlichen Lösungsmitteln ist nicht optimal, da deren Handhabung und Rückgewinnung zusätzlichen apparativen Aufwand bedürfen.

Es wurde nun überraschenderweise gefunden, dass man die Verbindungen der Formel I in vorzüglichen Ausbeuten und ohne die vorstehend erwähnten Nachteile in einem Einstufenverfahren erhält, wenn man 1 Mol Cyanurchlorid mit 1 Mol Amino-anthrachinon in überschüssigem Phenol ohne Zusatz von Säureakzeptoren umsetzt.

Die Umsetzung erfolgt in dem für derartige Kondensationen üblichen Temperaturbereich von 50–200°C.

Geeignete Amino-anthrachinone sind vor allem α-Aminoanthrachinone, die in den übrigen Positionen in der Anthrachinonchemie übliche, nichtionische, unter den Reaktionsbedingungen inerte Substituenten tragen können.

Beispielsweise seien genannt: Halogenatome, ggf. substituierte Aminogruppen, Nitrogruppen, Hydroxy-Gruppen, Mercaptogruppen.

Bevorzugte Verfahrensprodukte sind solche der Formel

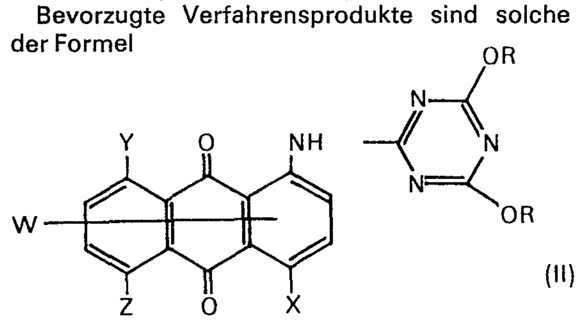

(II)

worin R die oben genannte Bedeutung hat und X, Y, Z für Wasserstoff, -OH, -OT, -NH-V, -ST, $NO_2$ oder

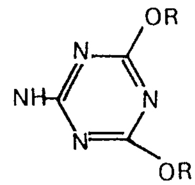

W für Wasserstoff, $NO_2$ oder Halogen,
T für ggf. substituiertes Alkyl, Cycloalkyl, Aralkyl oder Aryl und
V für T oder Acyl stehen.

Vorzugsweise beträgt die Zahl der charakteristischen Triazinylaminoreste 1 oder 2.

Geeignete Alkylreste sind $C_1$-$C_8$-Alkylrest, die z.B. durch OH, $C_1$-$C_4$-Alkoxy oder Halogen substituiert sein können.

Geeignete Cyloalkylreste sind Cyclohexylreste.

Geeignete Aralkylreste sind Benzyl- und Phenylethylreste.

Geeignete Arylreste sind Phenylreste, die z.B. durch $C_1$-$C_4$-Alkyl, $C_1$-$C_4$-Alkoxy oder Halogen substituiert sein können.

Geeignete Halogenatome sind Brom und besonders Chlor.

Besonders bevorzugte Verfahrensprodukte entsprechen den Formeln

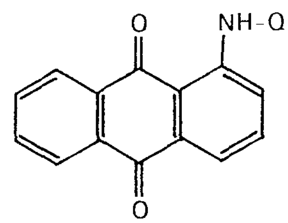

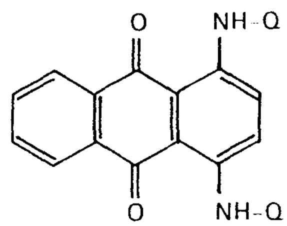

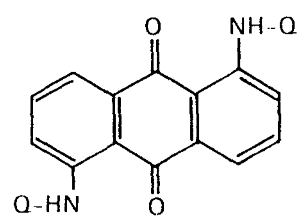

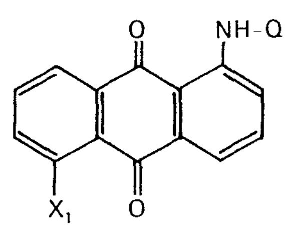

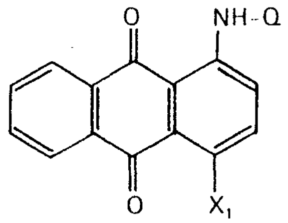

($X_1$ = OH, OT oder NHT)

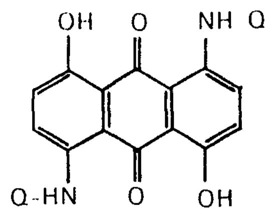

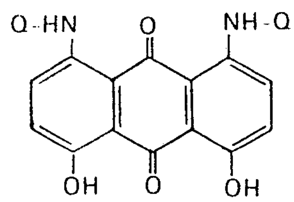

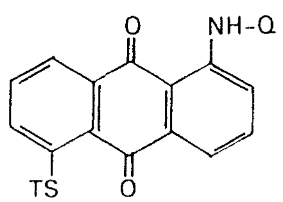

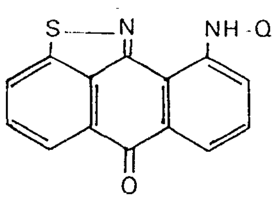

Q =

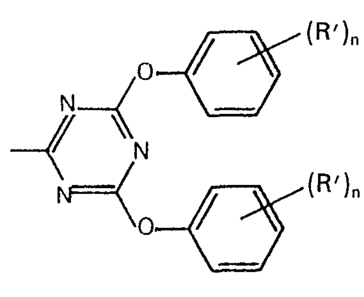

R' = $C_1$-$C_4$-Alkyl, Cl oder $C_1$-$C_4$-Alkoxy
n = 0–3, vorzugsweise 0 oder 1

Bei der praktischen Durchführung des Verfahrens geht man beispielsweise so vor, dass in die Schmelze der 3- bis 10-fachen, vorzugsweise 4- bis 6-fachen Gewichtsmenge eines Phenols (bezogen auf einzusetzendes Amino-anthrachinon) je 1 Mol Cyanurchlorid und Amino-anthrachinon einträgt, langsam auf 150–180° erhitzt und das Gemisch bei dieser Temperatur hält bis die HCl-Entwicklung abgeschlossen ist, was nach 3–6 Stunden der Fall ist.

Nach dem Abkühlen wird überschüssiges Phenol mit Wasserdampf abgetrieben und das kristalline Reaktionsprodukt in üblicher Weise isoliert.

Für analytische Zwecke kann das Rohprodukt durch Umkristallisieren gereinigt werden.

Die Ausbeuten sind praktisch quantitativ.

Die Verfahrensprodukte sind wertvolle Dispersionsfarbstoffe zum Färben von synthetischen Fasern oder Pigmente zur Einarbeitung in Lacke und Kunststoffschmelzen.

Weiterhin eignen sie sich zum Färben von mit Quellmitteln vorbehandelten Cellulosefasern.

Beispiel 1:
Darstellung des Farbstoffes der Formel

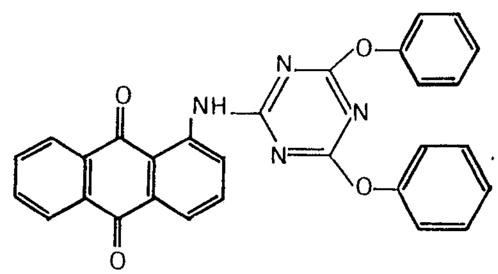

100 g Phenol werden bei 50–55° mit 23,5 g Cyanurchlorid und danach mit 27 g 1-Amino-anthrachinon versetzt.

Man erwärmt in einer Stunde auf 175° und hält 3 Stunden bei 180° wobei 13,3 g (= 3 Äquivalente) Chlorwasserstoff gasförmig entweichen. Man versetzt nach dem Abkühlen auf 120° mit 100 ml Wasser und treibt das nicht umgesetzte Phenol mit Dampf ab. Man saugt das in gelben Nädelchen kristallisierte gelbe Produkt bei 70–95° ab und trocknet bei 80–120°.

Ausbeute: 57 g
Fp.: 212–216°

Das Produkt ist rein genug für seine Verwendung als Polyester-Thermosolfarbstoff.

Der Farbstoff wird in ähnlicher Qualität und Ausbeute erhalten, wenn man die Umsetzung 6 Stunden bei 150–160° durchführt.

Beispiele 2–16:
Verfährt man wie in Beispiel 1, verwendet jedoch andere Amino-anthrachinone und Phenole so erhält man in ebenfalls hervorragenden Ausbeuten die in nachfolgender Tabelle aufgeführten Farbstoffe mit den angegebenen Farbtönen:

Farbstoffe der Formel

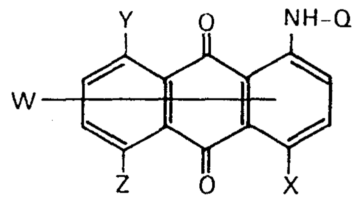

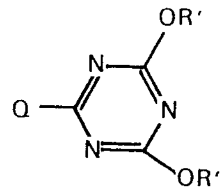

| Beispiel | X | Y | Z | W | R′ | Farbton |
|---|---|---|---|---|---|---|
| 2 | H | H | Benzoylamino | H | Phenyl | Gelb |
| 3 | Benzoylamino | H | H | H | p-Tolyl | gelbst. Rot |
| 4 | OH | H | H | H | Phenyl | Scharlach |
| 5 | OH | H | H | H | p-t-Butylphenyl | Scharlach |
| 6 | H | H | NHQ | H | Phenyl | rotst. Gelb |
| 7 | NHQ | H | H | H | m-Methoxyphenyl | gelbst. Rot |
| 8 | OH | OH | NHQ | H | p-Tolyl | Blaugrau |
| 9 | OH | NHQ | OH | H | Phenyl | Blaugrau |
| 10 | Phenylamino | H | H | H | Phenyl | Blau |
| 11 | Cyclohexylamino | H | H | H | p-t-Butylphenyl | Blau |
| 12 | Methoxy | H | H | H | o-Tolyl | Orange |
| 13 | H | H | 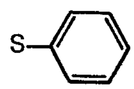 | H | Phenyl | Gelb |
| 14 | H | H | H | 6/7-Cl | Phenyl | Gelb |
| 15 | H | H | H | 6/7-$NO_2$ | p-Ethoxyphenyl | Gelb |
| 16 | OH | OH | $NO_2$ | H | Phenyl | rotst. Blau |

Beispiel 17:
Darstellung des Farbstoffes der Formel

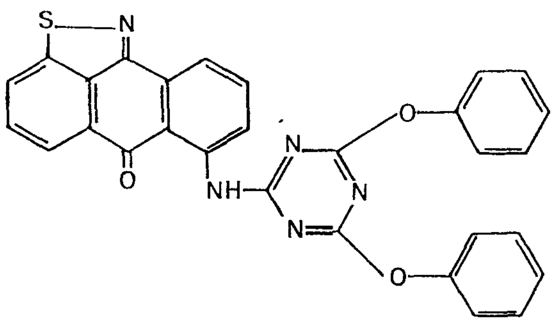

110 g Phenol werden bei 50–55° mit 23,5 g Cyanurchlorid und 30,5 g 5-Amino-1.9-isothiazolanthron versetzt und in etwa 1 Stunde auf 175–180° erwärmt. Man hält bei dieser Temperatur, bis die Chlorwasserstoffabspaltung beendet ist, was etwa 3 Stunden erfordert, versetzt mit 120 ml Wasser und treibt das nicht umgesetzte Phenol mit Wasserdampf ab. Nach Absaugen des in gelben Nädelchen kristallisierten Produktes und Trocknen bei etwa 100°C erhält man 62 g des oben genannten Farbstoffes, der Polyesterfasern nach dem Thermosolverfahren in leuchtend gelben Tönen färbt. Verwendet man anstelle des 5-Amino-1.9-isothiazolanthrons eine äquivalente Menge 4-Amino-1.9-pyrazolanthron, so erhält man analog den Farbstoff

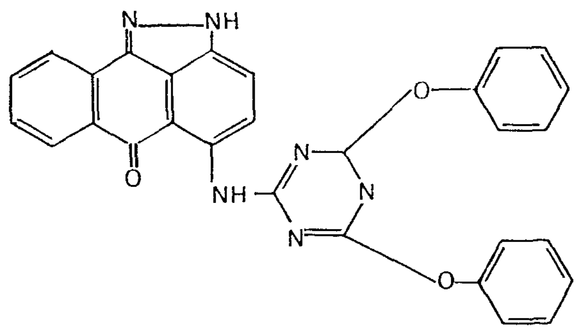

der Polyesterfasern in grünstichig gelben Tönen färbt.

**Patentansprüche**

1. Verfahren zur Herstellung von Verbindungen der Formel

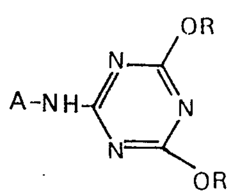

worin A ein ggf. substituierter Anthrachinonrest und R ggf. substituierter Arylrest sind, durch Kondensation entsprechender Amino-anthrachinone mit Cyanurchlorid und entsprechenden Phenolen bei erhöhten Temperaturen, dadurch

gekennzeichnet, dass man in einstufiger Arbeitsweise je 1 Mol Amino-anthrachinon und Cyanurchlorid in überschüssigem Phenol in Abwesenheit von Säureakzeptoren und organischen Lösungsmitteln umsetzt.

2. Verfahren nach Anspruch 1, dadurch gekennzeichnet, dass man die Umsetzung bei 50–200°C durchführt.

3. Verfahren nach Anspruch 1, dadurch gekennzeichnet, dass man die Umsetzung mit der 3- bis 5-fachen Gewichtsmenge Phenol durchführt.

4. Verfahren nach Anspruch 1, dadurch gekennzeichnet, dass man als Amino-anthrachinone α-Amino-anthrachinone einsetzt.

**Claims**

1. Process for the preparation of compounds of the formula

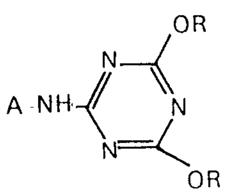

wherein
A is an optionally substituted anthraquinone radical and
R is an optionally substituted aryl radical, by condensation of corresponding amino-anthraquinones with cyanuric chloride and corresponding phenols at elevated temperatures, characterised in that 1 mol each of amino-anthraquinone and cyanuric chloride are reacted in excess phenol in a one-stage procedure in the absence of acid acceptors and organic solvents.

2. Process according to Claim 1, characterised in that the reaction is carried out at 50–200°C.

3. Process according to Claim 1, characterised in that the reaction is carried out with 3 to 5 times the amount by weight of phenol.

4. Process according to Claim 1, characterised in that α-amino-anthraquinones are employed as the aminoanthraquinones.

**Revendications**

1. Procédé de production de composés de formule:

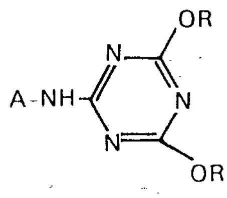

dans laquelle A est un reste d'anthraquinone éventuellement substitué et
R est un reste aryle éventuellement substitué, par condensation d'aminoanthraquinones correspondantes avec le chlorure de cyanuryle et des phénols correspondants, à températures élevées, caractérisé en ce qu'on fait réagir, en opérant en une seule étape, 1 mole d'aminoanthraquinone et 1 mole de chlorure de cyanuryle dans du phénol en excès en l'absence d'accepteurs d'acides et de solvants organiques.

2. Procédé suivant la revendication 1, caractérisé en ce qu'on conduit la réaction à 50–200°C.

3. Procédé suivant la revendication 1, caractérisé en ce qu'on conduit la réaction avec la quantité en poids triple à guintuple de phénol.

4. Procédé suivant la revendication 1, caractérisé en ce qu'on utilise des α-aminoanthraquinones comme aminoanthraquinones.